# EUROPÄISCHE PATENTSCHRIFT

(11) **EP 3 154 807 B1**
(45) Veröffentlichungstag und Bekanntmachung des Hinweises auf die Patenterteilung: **02.09.2020**
(21) Anmeldenummer: 15747376.0
(22) Anmeldetag: 01.06.2015
(51) Int. Cl.: H02K 7/108, B60K 6/387, B60K 6/40, H02K 5/22, B60K 6/405, B60K 6/48, H02K 7/00, B60K 17/02

(54) **MODULARES GEHÄUSE FÜR EIN HYBRIDMODUL**
MODULAR HOUSING FOR A HYBRID MODULE
CARTER MODULAIRE POUR MODULE HYBRIDE

(30) Priorität: 11.06.2014 DE 102014211143
(43) Veröffentlichungstag der Anmeldung: 19.04.2017
(73) Patentinhaber: Schaeffler Technologies AG & Co. KG, 91074 Herzogenaurach (DE)
(72) Erfinder: MACKOWIAK, Stefan, 76316 Malsch (DE); EISELE, Matthias, 76448 Durmersheim (DE); MAIER, Robert, 76593 Gernsbach (DE)
(86) Internationale Anmeldenummer: PCT/DE2015/200325
(87) Internationale Veröffentlichungsnummer: WO 2015/188819

(56) Entgegenhaltungen:
- EP-A1- 1 541 401
- EP-A1- 1 736 345
- WO-A1-2006/034520
- DE-T5-112012 003 398
- US-A1- 2008 093 135
- US-A1- 2009 251 018

## Beschreibung

Die Erfindung betrifft ein Hybridmodul für hybrid angetriebene Maschinen, insbesondere für Fahrzeuge mit Hybridantrieb, die eine Kombination aus Elektro- und Verbrennungsmotor aufweisen.

Der WO 2015/078462 A1 zeigt ein Beispiel für ein solches Hybridmodul. Dieses weist ein Hybridmodulgehäuse auf, bei welchem eine Zwischenwand zwischen dem Schwingungsdämpfer und der elektrischen Maschine integral mit dem Gehäuse ausgebildet ist.

Aus der EP 1 736 345 A1 ist ein Hybridmodul gemäß dem Oberbegriff des Anspruchs 1 bekannt.

Bezüglich weiteren Standes der Technik wird auf die DE 11 2012 003 398 T2 und auf die EP 1 541 401 A1 verwiesen.

Die Erfinder haben sich die Aufgabe gestellt, den vorliegenden Stand der Technik noch weiter zu verbessern. Insbesondere soll der Montageaufwand verringert und die Kompatibilität des Hybridmoduls erhöht werden.

Diese Aufgabe wird mit den in Anspruch 1 angegebenen Maßnahmen gelöst.

Weitere vorteilhafte Ausgestaltungen sind Gegenstand der abhängigen Ansprüche.

Durch die separate Ausbildung der beiden Bauteile wird eine Modularität des Gehäuses erreicht, die zu einem höheren Grad an Flexibilität in Herstellung und Anwendung führt. Schnittstellen mit anderen angrenzenden Bauteilen, z.B. Motor oder Getriebe sind flexibler definierbar. So kann z.B. unabhängig vom Außendurchmesser der elektrischen Maschine eine Schnittstelle zum Getriebe selbst mittels eines nach innen ragenden Flanschs gewährleistet werden, denn durch die aufgrund der Modularität mögliche Montage der elektrischen Maschine und des Kühlkanals von Verbrennungsmotorseite kann auf der Getriebeseite des Hybridmoduls die Flanschkontur des Gehäuses nach radial innen gezogen werden womit für die Verschraubung zum Getriebe ausreichend Material zur Verfügung steht. Man kann nun zwischen verschiedenen Montagereihenfolgen der Komponenten des Hybridmoduls wählen, Verkabelungen einfacher lösen und sogar das Gehäuse an einer Stirnseite mit einem kleineren Öffnungsdurchmesser oder einem radial nach innen ragenden Flansch versehen, so dass auch die Kompatibilität zu verschiedenen Getriebeglockengrößen, insbesondere solchen mit kleineren Außendurchmessern als der Außendurchmesser des Hybridmodulgehäuses erhöht ist. Zum Beispiel bietet ein separates erstes Bauteil, das z.B. als Zwischenwand dient, Vorteile bzgl. der Verkabelung des Rotorlagesensors. Z.B. ist es damit möglich, dass bei der Montage bevorzugt das Kabel an die Zwischenwand auf der E-Maschinenseite bereits angelegt oder in die Zwischenwand verlegt und befestigt wird. Damit ist ein Durchgang der Kabel des Sensors durch die Zwischenwand wie heute bekannt nicht mehr erforderlich. Dies hat Vorteile bzgl. Steifigkeit und Abdichtung der Wand. Dieses erste Bauteil kann dabei auch einen weiteren axialen Bereich aufweisen, mit welchem es einen Schwingungsdämpfer radial umgibt. Durch diese Konstruktion können dann Kabel auch axial in Richtung Motor aus dem Gehäuse des Hybridmoduls hinausgeführt werden.

Im Folgenden bezieht sich die Verwendung von radial und axial auf die Rotorachse des Hybridmoduls.

Die elektrische Maschine weist bevorzugt einen Rotor auf, in welchem die Kupplung integriert ist. Das Hybridmodulgehäuse ist bevorzugt ohne eine integrale Zwischenwand für die Anbindung des Kupplungssystems mit Rotor ausgeführt.

Der radial verlaufende Gehäusebereich ist bevorzugt ein Wandbereich, welcher sich zwischen einem radial äußeren Punkt zu einem radial inneren Punkt erstreckt und dessen radiale Ausdehnung größer als die axiale Ausdehnung ist. Unter einem radialen Verlauf wird auch ein wesentlich radialer Verlauf verstanden, d.h. z.B. im Extremfall, dass der Winkel zwischen Achse und dem radialen Gehäusebereich größer als 45° ist. Unter axial neben der elektrischen Maschine angeordnet wird verstanden, dass von der Verbrennungsmotorseite aus kommend in axialer Richtung zunächst der radial verlaufende Gehäusebereich angeordnet ist und danach die elektrische Maschine. Bevorzugt weist das erste Bauteil, welches den radial verlaufenden Gehäusebereich bildet, eine Öffnung zur Durchführung einer Welle (z.B. Rotorwelle oder Antriebswelle oder Welle zwischen Kupplung und Schwingungsdämpfer) auf. Besonders bevorzugt weist die Öffnung ein Lager auf, z.B. ein ein- oder mehrreihiges Wälzlager, welches die Welle drehbar gegenüber dem Gehäusebereich lagert. Bevorzugt ist das erste Bauteil eine abdichtende Trennwand zwischen einem Gehäuseraum, in dem die elektrische Maschine mit der Kupplung, bevorzugt nass, läuft und einem Außenraum oder einem Raum, in dem ein Schwingungsdämpfer angeordnet ist. Das erste Bauteil, bevorzugt als Zwischenwand ausgebildet, ist bevorzugt als Stahl- (z.B. Blech, Schmiedeteil) oder auch Aluminium-Teil (z.B. Druckguss) ausgeführt.

Die Kupplung weist eine Betätigungseinrichtung auf, welche an dem ersten Bauteil indirekt oder bevorzugt direkt abgestützt ist. Z.B. ist die Betätigungseinrichtung ein elektronischer Zentralausrücker. Die Abstützung der Betätigungseinrichtung erfolgt bevorzugt über eine Trägereinrichtung, besonders bevorzugt ist die Trägereinrichtung der Betätigungseinrichtung integraler Bestandteil des ersten Bauteils. Z.B. sind eine Trägereinrichtung eines elektronischen Zentralausrückers und der radial verlaufende Gehäusebereich, z.B. ein als Zwischenwand ausgebildeter radial verlaufender Gehäusebereich, durch das erste Bauteil (z.B. als Schmiedeteil) ausgebildet.

Der axial verlaufende Gehäusebereich ist bevorzugt ein Wandbereich, welcher sich zwischen zwei axial voneinander beabstandeten Punkten erstreckt und dessen radiale Ausdehnung kleiner als die axiale Ausdehnung ist. Unter einem axialen Verlauf wird auch ein wesentlich axialer Verlauf verstanden, d.h. z.B. im Extremfall, dass der Winkel zwischen Achse und dem radialen Gehäusebereich kleiner als 45° ist. Der axial verlaufende Gehäusebereich umgibt das Hybridmodul, bevorzugt die elektrische Maschine und/oder einen Schwingungsdämpfer, zumindest teilweise, d.h. dass er z.B. teilweise einen ringförmigen Querschnitt aufweist und/oder die Rotorachse/Antriebsachse einmal umrundet. Bevorzugt umgibt er das Hybridmodul im Wesentlichen zylindermantelförmig, besonders bevorzugt vollständig. Bevorzugt ist das zweite Bauteil, welches den axial verlaufenden Gehäusebereich bildet, eine abdichtende Trennwand zwischen einem Gehäuseraum, in dem die elektrische Maschine mit der Kupplung, bevorzugt nass, läuft und einem Außenraum.

Bei einem weiteren Hybridmodul weist das zweite Bauteil getriebeseitig einen Flansch zur Anbindung einer Getriebeglocke auf, wobei der Flansch eine Kontur definiert, die mindestens einen Konturbereich (bevorzugt mehrere Konturbereiche) aufweist, der (die) sich radial innerhalb des Außendurchmessers des axial verlaufenden Gehäusebereichs befindet (befinden).

Durch die Kombination eines derartigen, nach innen ragenden Flansches mit der Modularität des Gehäuses ist nun bei gleichzeitig einfacher Montage eine höhere Komptabilität des Hybridmoduls mit verschieden großen Getriebeglocken möglich. So kann es je nach technischer Vorgabe sein, dass die Flanschfläche der Getriebeglocke und damit der Verschraubungs-Teilkreis radial kleiner baut als die Außenkontur des Hybridmodulgehäuses. In diesem Fall ist die Verschraubung des Hybridmoduls gemäß dem Stand der Technik mit dem Getriebe nicht möglich, da kein Material im Gehäuse zur Verfügung steht dieses kann dort nicht z.B. in Form eines Flanschs angebracht werden, da sonst die Komponenten des Hybridmoduls wie zumindest Kühlkanal möglicherweise aber auch Stator, Rotor, Kupplung nicht mehr in das Gehäuse mit der dann verringerten getriebeseitigen Öffnung eingebracht werden können. Bei dem Hybridmodul erfolgt hingegen dann die Montage der Komponenten, oder zumindest des Kühlkanals und/oder Stators von der Verbrennungsmotorseite her kommend, was möglich ist, da dort keine integrale Zwischenwand den Weg versperrt.

Bevorzugt weist der Flansch in den radial innerhal liegenden Konturbereichen Befestigungspunkte auf. Ein Befestigungspunkt ist bevorzugt ein Punkt, in welchem ein Kraft- und/oder Form- und/oder Stoffschluss des zweiten Bauteils mit dem Getriebe stattfindet oder stattfinden soll. Er ist z.B. eine Bohrung und/oder ein Gewinde oder eine Nut oder ein Langloch. Bevorzugt ist die Flanschkontur zum Getriebe je nach Flanschbild der Getriebeglocke nach radial innen gezogen

Bevorzugt befindet sich der mindestens eine Konturbereich radial innerhalb des Innendurchmessers des axial verlaufenden Gehäusebereichs.

Bevorzugt umgibt der axial verlaufende Gehäusebereich bei Vorhandensein eines Flanschs die elektrische Maschine (und nicht den Schwingungsdämpfer).

Bevorzugt befindet sich der mindestens eine Konturbereich radial innerhalb des Außen- oder Innendurchmessers eines Kühlkanals. Hierdurch ist eine Getriebeglocke mit etwas kleinerem Durchmesser montierbar, wobei immer noch (je nach konkreter Geometrie) Stator, Rotor und Kupplung auch von der Getriebeseite aus kommend montierbar sind.

Bevorzugt befindet sich der mindestens eine Konturbereich radial innerhalb des Außen- oder Innendurchmessers des Stators. Hierdurch ist eine Getriebeglocke mit noch kleinerem Durchmesser montierbar, wobei immer noch (je nach konkreter Geometrie) Rotor und Kupplung auch von der Getriebeseite aus kommend montierbar sind.

Bevorzugt befindet sich der mindestens eine Konturbereich radial innerhalb des Außen- oder Innendurchmessers des Rotors. Hierdurch ist eine Getriebeglocke mit sehr kleinem Durchmesser montierbar, wobei immer noch (je nach konkreter Geometrie) die Kupplung auch von der Getriebeseite aus kommend montierbar ist.

Bevorzugt befindet sich der mindestens eine Konturbereich radial innerhalb des Außen- oder Innendurchmessers der Kupplung. Hierdurch ist eine Getriebeglocke mit sehr sehr kleinem Durchmesser montierbar.

Bei einem weiteren Hybridmodul weist das Hybridmodul einen Schwingungsdämpfer auf und das erste Bauteil ist als Zwischenwand axial zwischen einerseits dem Schwingungsdämpfer und andererseits der elektrischen Maschine und/oder der Kupplung angeordnet.

Hierdurch ist eine sehr kompakte Bauform wählbar. Bevorzugt dichtet die Zwischenwand den Gehäuseraum, welcher die elektrische Maschine und/oder die Kupplung umschließt, und den Gehäuseraum, in welchem sich der Schwingungsdämpfer befindet voneinaner ab. Das zweite Bauteil bildet bevorzugt einen Gehäuseraum für den Schwingungsdämpfer und einen Gehäuseraum für die elektrische Maschine.

Der Schwingungsdämpfer ist bevorzugt ein Torsionsdämpfer.

Bei einem weiteren Hybridmodul ist das erste Bauteil bevorzugt indirekt, besonders bevorzugt direkt mit dem zweiten Bauteil und/oder einem Kühlkanal und/oder einem Stator der elektrischen Maschine verbunden.

Bevorzugt sind die Bauteile drehfest miteinander verbunden.

Bei einem weiteren Hybridmodul weisen das erste Bauteil und/oder das zweite Bauteil eine Aussparung zur Führung oder Durchführung eines Sensor- und/oder Steuerkabels und/oder einer elektrischen Kontaktierung zur Versorgung der elektrischen Maschine und/oder einer Betätigungseinrichtung der Kupplung mit elektrischer Energie auf.

Hierdurch ist eine flexible und sichere Kabelverlegung oder Kontaktierung möglich. Bevorzugt ist die Aussparung an einer Kante des Bauteils vorhanden, d.h. dass die Aussparung nicht vollkommen durch Material des Bauteils umgeben ist. Somit muss das Kabel oder die Kontaktierung nicht durch ein Loch hindurchgeführt werden, womit evtl. vorhandene Stecker nicht demontiert werden müssen oder einfach nur eine einfachere Montage möglich ist.

Bei einem weiteren Hybridmodul weist das Gehäuse zwei Gehäusehälften auf, wobei eine der Gehäusehälften das erste Bauteil aufweist und die andere der Gehäusehälften das zweite Bauteil aufweist.

Hierdurch ist eine schnelle Montage durch das Zusammenfügen zweier Gehäusehälften möglich. Eine Gehäusehälfte muss nicht zwingend die Hälfte des Volumens oder Gewichts des gesamten Gehäuses darstellen. Bevorzugt wird unter einer Gehäusehälfte verstanden, dass durch Zusammenführen zweier Gehäusehälften das Gehäuse, bevorzugt im Wesentlichen, komplettiert ist. Bevorzugt werden die einzelnen Gehäuse jeweils vormontiert und dann miteinander verbunden. Bevorzugt bestehen eine oder beide Gehäusehälften aus je einem einstückigen Bauteil.

Das Gehäuse besteht dabei z.B. aus einem getriebeseitigen Gehäuseteil als zweite Gehäusehälfte, in dem bevorzugt der Kühlkanal inkl. Stator der E-Maschine integriert ist. Die Befestigung des Kühlkanals erfolgt bevorzugt wie oben beschrieben mittels Verschraubung. Bevorzugt weist der getriebeseitige Gehäuseteil die Öffnungen für die Verschraubungen mit der Getriebeglocke auf.

In einem motorseitigen Gehäuseteil ist als erste Gehäusehälfte durch das zweite Bauteil eine Zwischenwand integriert, an dem das Kupplungssystem befestigt ist. Die erste Gehäusehälfte übergreift den Schwingungsdämpfer radial außen in axialer Richtung und bevorzugt weist er auf der Getriebeseite z.B. Führungen für den Rotorlagesensor auf.

Beide Gehäusehälften werden in der Endmontage bevorzugt miteinander verschraubt. Zwischen den Gehäusehälften ist bevorzugt eine Dichtung vorgesehen. Bevorzugt weist ein oder weisen beide Gehäusehälften Aussparungen auf, welche ein Kabel oder eine elektrische Kontaktierung aufnehmen. Somit ist kein Durchbruch in der Zwischenwand für das Rotorlagesensorkabel (das Kabel wird auf Seite der elektrischen Maschine befestigt) notwendig, da dies über die Anschlussstelle der beiden Gehäusehälften nach außen geführt werden kann. Ebenso kann eine elektrische Kontaktierung zur Versorgung der elektrischen Maschine mit elektr. Antriebsenergie zwischen den Gehäuseteilen erfolgen, die bevorzugt kunststoffummantelt ist. Bevorzugt ist der Kühlkanal an das zweite Bauteil oder die zweite Gehäusehälfte anschraubbar. Die Verschraubung des Kühlkanals im Gehäuse kann bauraum-neutral zwischen den Gehäuseteilen erfolgen.

Bei einem weiteren Hybridmodul liegt die Aussparung in einem Bereich vor, in dem die zwei Bauteile in Kontakt zueinander stehen, oder die Aussparung liegt in einem Bereich vor, in dem die zwei Gehäusehälften in Kontakt zueinander stehen.

Hierdurch ist eine Kabeldurchführung oder eine Kontaktdurchführung in einfacher Weise möglich, z.B. indem die Hälften oder Bauteile aneinandergefügt werden. Bevorzugt ist die Aussparung an einer Kante des Bauteils vorhanden, d.h. dass die Aussparung nicht vollkommen durch Material des Bauteils umgeben ist, was den zuvor bereits genannten Vorteil bringt.

Die Erfindung wird nun beispielhaft durch Figuren veranschaulicht. Hierbei zeigen:
**Fig. 1** ein erfindungsgemäßes Hybridmodul,
**Fig. 2** ein erfindungsgemäßes Hybridmodul, aufbauend auf Figur 1, wobei das Hybridmodul außerdem einen Schwingungsdämpfer aufweist,
**Fig. 3** ein erfindungsgemäßes Hybridmodul ähnlich wie in Figur 1 und 2, wobei das Modul ein Gehäuse mit zwei Gehäusehälften aufweist,
**Fig. 4** ein erfindungsgemäßes Hybridmodul ähnlich wie in Figur 3, wobei eine getriebeseitige Gehäusehälfte den radial verlaufenden Gehäusebereich aufweist,
**Fig. 5a-5c** ein erfindungsgemäßes Hybridmodul, aufbauend auf Figur 2, wobei das Hybridmodul als erstes Bauteil eine Zwischenwand aufweist,
**Fig. 6a-6c** ein erfindungsgemäßes Hybridmodul, aufbauend auf Figur 3,
**Fig. 7a-7d** die verbrennungsmotorseitige Gehäusehälfte des Moduls aus Figur 6a-6c in verschiedenen Ansichten und Montagezuständen,
**Fig. 8a-8d** die getriebeseitige Gehäusehälfte des Moduls aus Figur 6a-6c in verschiedenen Ansichten und Montagezuständen.

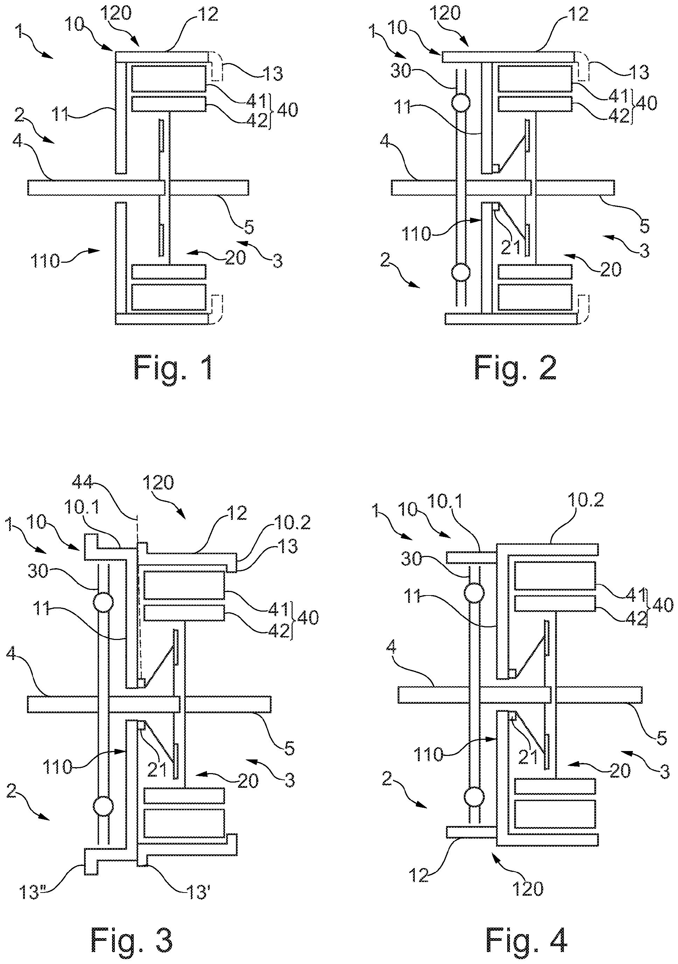

**Fig. 1** zeigt ein erfindungsgemäßes Hybridmodul 1. Es weist eine Kupplung 20 bevorzugt mit einer Betätigungseinrichtung , eine elektrische Maschine 40, die hier einen Stator 41 und einen Rotor 42 aufweist, eine Verbrennungsmotorseite 2 und eine Getriebeseite 3 auf, wobei in diesem Beispiel eine getriebeseitige Welle 5 und eine verbrennungsmotorseitige Welle 4 vorhanden ist. Es weist auch ein Gehäuse 10 auf mit einem radial verlaufenden Gehäusebereich 110, der verbrennungsmotorseitig axial neben der elektrischen Maschine 40 angeordnet ist, und mit einem axial verlaufenden Gehäusebereich 120, der das Hybridmodul 1 zumindest teilweise umgibt. Das Gehäuse 10 weist zudem zwei separate Bauteile 11, 12 auf, wobei das erste Bauteil 11 den radial verlaufenden Gehäusebereich 110 ausbildet und das zweite Bauteil 12 den axial verlaufenden Gehäusebereich 120 ausbildet. Gestrichelt eingezeichnet ist ein optionaler Flansch 13, den das zweite Bauteil 12 getriebeseitig zur Anbindung einer Getriebeglocke aufweist, wobei der Flansch 13 eine Kontur definiert, die mindestens einen Konturbereich aufweist, der sich radial innerhalb des Außendurchmessers des Stator 41 befindet.

Die Herstellung des Hybridmoduls 1 beinhaltet ein Verbinden des ersten Bauteils 11 mit dem zweiten Bauteil 12.

Hierdurch ist ein flexibleres axiales Einführen der elektrischen Maschine 40 und/oder der Kupplung 20 von links (Verbrennungsmotorseite) oder rechts (Getriebeseite) möglich und auch Verkabelungen sind einfacher durchzuführen. Über den optionalen Flansch 13, welcher dann die Montage nicht behindert, da die Montage sehr flexibel durchführbar ist, können verschiedene Getriebeglockenflanschgrößen, auch kleiner als das Hybridmodul 1, an das Hybridmodul 1 befestigt werden.

**Fig. 2** zeigt ein erfindungsgemäßes Hybridmodul 1, aufbauend auf Figur 1, wobei das Hybridmodul 1 außerdem einen Schwingungsdämpfer 30 aufweist. Das erste Bauteil 11 ist als Zwischenwand axial zwischen einerseits dem Schwingungsdämpfer 30 und andererseits der elektrischen Maschine 40 und der Kupplung 20 angeordnet. Die Kupplung 20 weist eine Betätigungseinrichtung 21 auf, welche an dem ersten Bauteil 11 abgestützt ist. Das zweite Bauteil 12 bildet auch einen Gehäuseraum für den Schwingungsdämpfer 30.

Hierdurch ist eine kompakte Bauform gegeben.

**Fig. 3** zeigt ein erfindungsgemäßes Hybridmodul 1 ähnlich wie in Figur 1 und 2, wobei das Modul ein Gehäuse 10 mit zwei Gehäusehälften 10.1, 10.2 aufweist. Die verbrennungsmotorseitige Gehäusehälfte 10.1 weist das erste Bauteil 11 auf und die getriebeseitige Gehäusehälfte 10.2 weist das zweite Bauteil 12 auf. Das erste Bauteil 11 weist hier einen zusätzlichen radialen Bereich auf, mit dem es den Schwingungsdämpfer 30 radial umgibt. Optional weist die getriebeseitige Gehäusehälfte 10.2 einen getriebeseitigen Flansch 13 zur Verschraubung des Getriebes mit der Gehäusehälfte 10.2 auf sowie ferner einen verbrennungsmotorseitigen Flansch 13 zur Verschraubung der Gehäusehälfte 10.2 mit der Gehäusehälfte 10.1. Optional weist die verbrennungsmotorseitige Gehäusehälfte 10.1 einen verbrennungsmotorseitigen Flansch 13 zur Verschraubung mit dem Verbrennungsmotor auf. Bevorzugt wird ein Sensorkabel 44, gestrichelt gezeichnet, an dem radial verlaufenden Gehäusebereich 110 nach radial außen zwischen den Gehäusehälften 10.1, 10.2 geführt, wodurch kein Durchbruch in dem radialen Gehäusebereich notwendig ist. Vorzugsweise ist radial außerhalb des Stators 41 und innerhalb der zweiten Gehäusehälfte 10.2 ein Kühlkanal 50 angeordnet.

Hierdurch ist eine einfache Montagemöglichkeit gegeben. Insbesondere werden bevorzugt die einzelnen Gehäuse jeweils vormontiert und dann miteinander verbunden. Getriebe mit verschiedenen Teilkreisdurchmessern können angeschraubt werden, indem lediglich die Gehäusehälfte 10.2 entsprechend angepasst wird.

**Fig. 4** zeigt ein erfindungsgemäßes Hybridmodul 1 ähnlich wie in Figur 3, wobei die getriebeseitige Gehäusehälfte 10.2 den radial verlaufenden Gehäusebereich 110, gebildet durch das erste Bauteil 11, aufweist. Die verbrennungsmotorseitige Gehäusehälfte 10.1 weist den axial verlaufenden Gehäusebereich 120, gebildet durch das Bauteil 12 auf. Hierdurch ist der verbrennungsmotorseitige Anschluss in seinem Durchmesser flexibel anpassbar, da die Montage der elektrischen Maschine 40 bevorzugt von der Getriebeseite 3 aus kommend erfolgt.

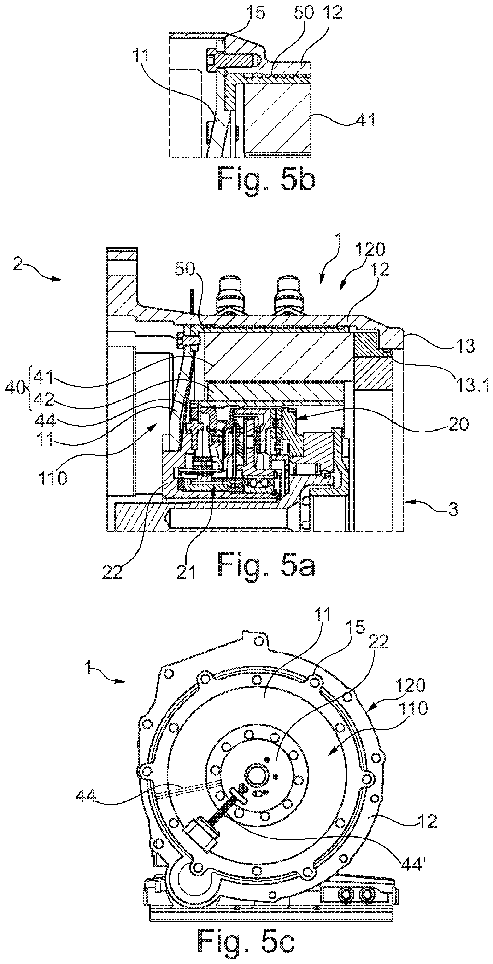

**Fig. 5a-5c** zeigen ein erfindungsgemäßes Hybridmodul 1, aufbauend auf Figur 2, wobei das Hybridmodul 1 als erstes Bauteil 11 eine Zwischenwand aufweist, welche den radial verlaufenden Gehäusebereich 110 bildet. Fig. 5b zeigt einen Ausschnitt eines Schnitts an einer anderen Winkelposition als in Fig. 5a, Fig. 5c zeigt eine Sicht auf das Hybridmodul von der Verbrennungsmotorseite 2 aus. Das zweite Bauteil 12 bildet den axial verlaufenden Gehäusebereich 120, welcher einen getriebeseitigen Raum für die elektrische Maschine 40 bildet und einen verbrennungsmotorseitigen Raum für den Schwingungsdämpfer 30, welcher hier noch nicht montiert ist. Die Kupplung 20 ist in dem Rotor 42 integriert und weist als Betätigungseinrichtung 21 einen elektronischen Zentralausrücker auf, welcher über eine Trägereinrichtung 22 an der Zwischenwand abgestützt ist. Den Stator 41 umgibt ein Kühlkanal 50. An den Kühlkanal 50 und bevorzugt an das zweite Bauteil 12 ist die Zwischenwand mit ihrem radial äußeren Endbereich verschraubt. Hierfür weist die Zwischenwand bevorzugt auch Laschen 15 auf, welche in Fig. 5c zu sehen sind, damit Schrauben auch radial außerhalb des Kühlkanals 50 in das Material des zweiten Bauteils 12 geschraubt werden können. Bevorzugt ist die Zwischenwand dichtend verschraubt, z.B. über einen Dichtgummi, und dichtet den Raum für den Schwingungsdämpfer 30 von dem Raum für die elektrische Maschine 40 ab. Ein Sensorkabel 44 eines Rotorlagesensors ist auf der der Getriebeseite 3 zugewandten Seite der Zwischenwand verlegt. Es ist bevorzugt durch eine Öffnung des zweiten Bauteils 12 hindurch nach radial nach außen geführt. Ein Steuerkabel 44 für den elektronischen Zentralausrücker 21 ist aus der Trägereinrichtung 22 heraus auf die der Verbrennungsmotorseite 2 zugewandte Seite der Zwischenfläche geführt und an dieser entlang verlegt. Ein Flansch 13 ist am getriebeseitigen Ende des zweiten Bauteils 12 nach innen ausbildet, wobei sich die durch den Flansch 13 gebildete Kontur 13.1 zumindest bereichsweise innerhalb des Außendurchmessers des Stators befindet.

Zur Montage wird der Kühlkanal 50 in das zweite Bauteil 12 von der Verbrennungsmotorseite 2 her kommend eingeführt und befestigt. Dabei ist bevorzugt zumindest der Stator 41 zuvor mit dem Kühlkanal 50 zu einer Baugruppen verbunden worden. Die Montage des Rotors 42 und der Kupplung 20 erfolgt dann von der Getriebeseite 3 oder der Verbrennungsmotorseite 2 aus die Kontur 13.1 des Flanschs 13 erlaubt beide Möglichkeiten. Alternativ werden Rotor 42 und Kupplung 20 ebenfalls bereits zu der Baugruppe mit dem Kühlkanal 50 und dem Stator 41 verbunden und die Montage erfolgt von der Verbrennungsmotorseite 2 her kommend. Vorteilhaft dabei ist, dass die Verkabelung schon an die Zwischenwand anbringbar ist. Anschließend wird die Zwischenwand von der Verbrennungsmotorseite 2 her kommend in das Bauteil 12 eingeführt und dort mit dem Kühlkanal 50 und dem zweiten Bauteil 12 verschraubt.

Hierdurch ergeben sich verschiedene Möglichkeiten der Montage.

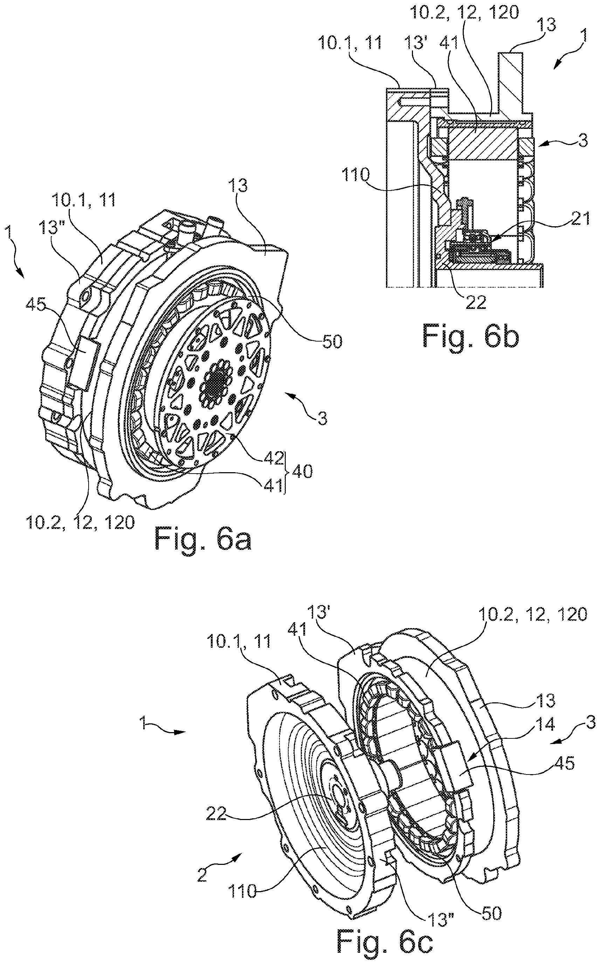

**Fig. 6a-6c** zeigen in verschiedenen Ansichten ein erfindungsgemäßes Hybridmodul 1, aufbauend auf Figur 3. Im Gegensatz zu Fig. 3 ist der Flansch 13 nach außen und nicht nach innen gezogen. Zudem weist das Hybridmodul 1 einen Kühlkanal 50 auf. Die Gehäusehälften 10.1 und 10.2 sind jeweils einstückig ausgebildet. Die getriebeseitige Gehäusehälfte 10.2 weist verbrennungsmotorseitig einen Flansch 13 zur Anbindung der verbrennungsmotorseitig Gehäusehälfte 10.1 auf, welche wiederum verbrennungsmotorseitig einen Flansch 13 zur Anbindung an den Verbrennungsmotor aufweist. Die beiden Gehäusehälften 10.1 und 10.2 sind miteinander über den Flansch 13 verschraubt. Eine elektrische Kontaktierung 45 sitzt zwischen den Gehäusehälften 10.1 und 10.2 in einer Aussparung 14. Beim Zusammenbau wie in Fig. 6c gezeigt sind die Trägereinrichtung 22 und die Betätigungseinrichtung 21 bereits mit der verbrennungsmotorseitigen Gehäusehälfte 10.1 zu einer Baugruppe verbunden.

Durch die beiden Gehäusehälften ist eine modulare, flexible Montage möglich. Zudem braucht zur Anpassung der Schnittstelle zum Verbrennungsmotor oder zum Getriebe nur jeweils eine Gehäusehälfte verändert werden, während die andere beibehalten werden kann.

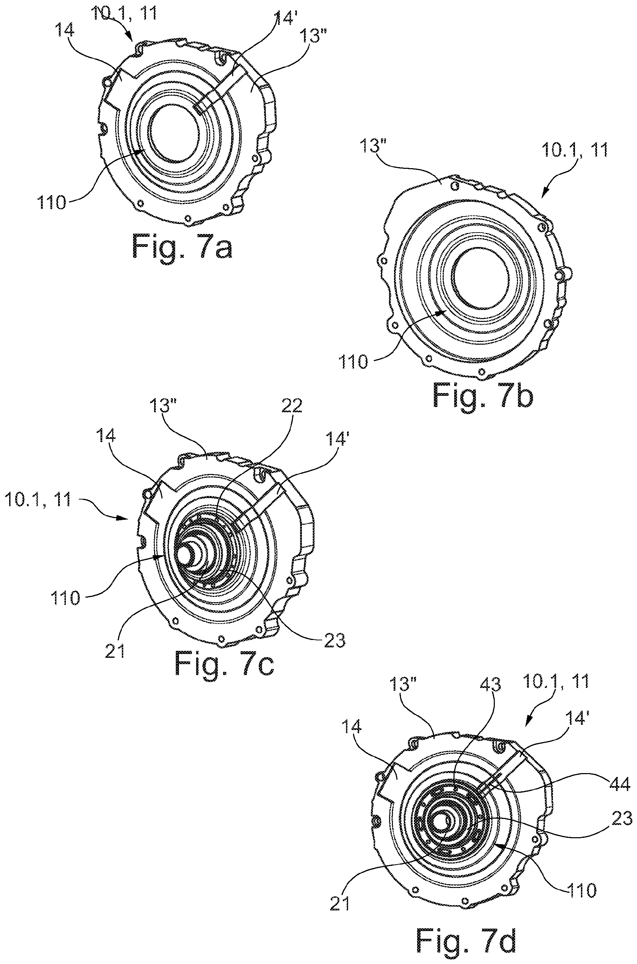

**Fig. 7a-7d** zeigen die verbrennungsmotorseitige Gehäusehälfte 10.1 des Moduls 1 aus Figur 6a-6c in verschiedenen Ansichten und Montagezuständen. Figuren 7a, 7c und 7d zeigen die der Getriebeseite 3 zugewandte Seite, Figur 7b die der Verbrennungsmotorseite 2 zugewandte Seite der Gehäusehälfte 10.1, welche einen konkaven Raum für den Schwingungsdämpfer bildet. Die der Getriebeseite 3 zugewandte Seite weist eine Aussparung 14 für die elektrische Kontaktierung für die Übertragung der elektrischen Antriebsenergie auf, z.B. für eine z.B. kunststoffumspritzte Stromschiene, sowie eine Aussparung 14 für das Verlegen eines Rotorlagesensorkabels 44 des Rotorlagesensors 43. Hierdurch ist kein Durchbruch durch den radial verlaufenden Gehäusebereich 110 notwendig. In Fig. 7c sind das erste Bauteil 11, die Trägereinrichtung 22, der elektronische Zentralausrücker 21 und ein Wälzlager 23, welches auf dem Zentralausrücker 21 sitzt, zu einer Baugruppe vormontiert. In Fig. 7d weist diese Baugruppe dann zusätzlich noch den Rotorlagesensor 43 auf. Bevorzugt wird das Kabel 44 für den Rotorlagesensor 14 in die Aussparung 14 gelegt und der zugehörige Stecker montiert. Sobald die Kupplung ebenfalls vormontiert ist, wird die Baugruppe mit der anderen Gehäusehälfte 10.2 zusammengeführt.

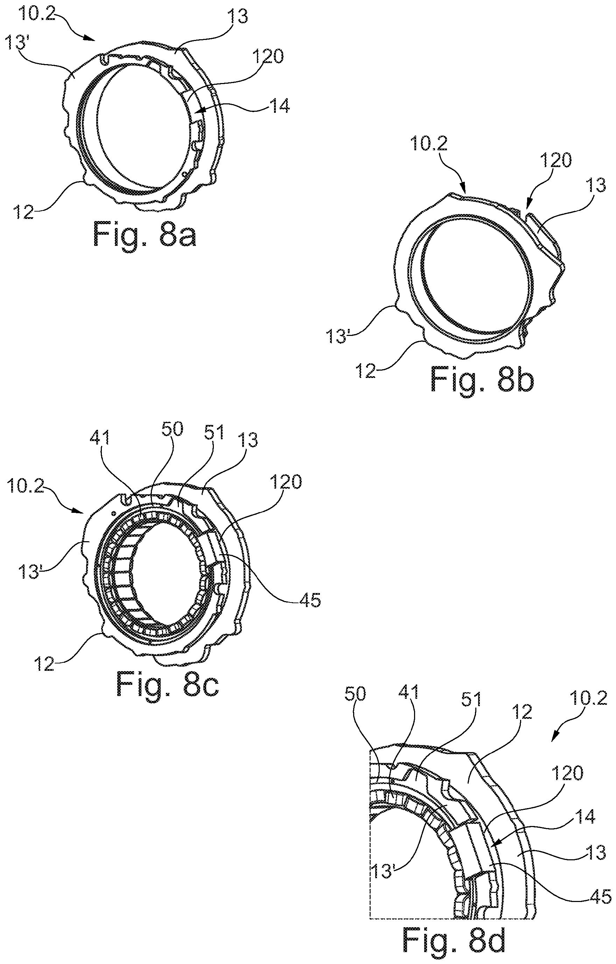

**Fig. 8a-8d** zeigen die getriebeseitige Gehäusehälfte 10.2 des Moduls aus Figur 6a-6c in verschiedenen Ansichten und Montagezuständen. Figuren 8a, 8c und 8d zeigen die der Verbrennungsmotorseite 2 zugewandte Seite an dieser ist ebenfalls eine Aussparung 14 für die elektrische Kontaktierung 45 vorhanden, welche der Aussparung 14 des verbrennungsmotorseitigen Gehäuseteils 10.2 im zusammengesetzten Zustand direkt gegenüberliegt, Figur 8b die der Getriebeseite 3 zugewandte Seite der Gehäusehälfte 10.2. In Fig. 8c ist der Kühlkanal 50 und der Stator 41 in das Bauteil 12 eingeführt und bevorzugt befestigt. Der Kühlkanal 50 ist bevorzugt durch eine oder mehrere Kühlkanallaschen, welche in eine entsprechenden Aussparung des Bauteils 12 greift, geführt und/oder über diese verschraubt. Die kunststoffumspritzte elektrische Kontaktierung 45 fügt sich dabei in die Aussparung 14 ein.

Diese zwei sehr vorteilhaft aufeinander abgestimmte Gehäusehälften 10.1 und 10.2 erleichtern die Montage wesentlich. Insbesondere wird der Verkabelungsaufwand verringert.

Mit dieser Erfindung wurde ein Hybridmodul mit einem modularen Gehäuse vorgestellt, sowie ein Verfahren zum Zusammenbau desselben. Dabei weist das Gehäuse zwei separate Bauteile auf, wobei eines einen axial verlaufenden Gehäusebereich bildet und das andere einen radial verlaufenden Gehäusebereich, z.B. als Zwischenwand. Die Anwendung mit separatem Bauteil als radial verlaufender Gehäusebereich bietet wie ein Baukasten den Vorteil, dass eine solches Bauteil evtl. für verschiedene Hybridmodultypen verwendbar ist. Es erfolgt lediglich eine Anpassung des Gehäuses je nach Kundenbauraum. Dies kann Kostenvorteile haben. Weiterhin ist die Montagereihenfolge freier ausführbar. Insbesondere betrifft die Erfindung auch ein Hybridmodul mit einer vom Hybridmodul-Gehäuse getrennten Zwischenwand als erstem Bauteil. Weiterhin bietet auch eine Aufteilung des Gehäuses in zwei separate Einzel-Gehäusehälften Vorteile. Die Erfindung findet insbesondere Einsatz bei Hybridanwendungen, bei denen ein Hybridmodul, bestehend aus einem Dämpfersystem, einer Trennkupplung und einem E-Motor, axial zwischen einem Verbrennungsmotor und einem Getriebe angeordnet ist.

### Bezugszeichenliste

- 1: Hybridmodul
- 2: Verbrennungsmotorseite
- 3: Getriebeseite
- 4: verbrennungsmotorseitige Welle
- 5: getriebeseitige Welle
- 10: Gehäuse
- 10.1: verbrennungsmotorseitige Gehäusehälfte
- 10.2: getriebeseitige Gehäusehälfte
- 11: erstes Bauteil
- 12: zweites Bauteil
- 13: Flansch
- 13.1: durch den Flansch gebildete Kontur
- 14: Aussparung
- 15: Lasche
- 20: Kupplung
- 21: Betätigungseinrichtung
- 22: Trägereinrichtung
- 23: Lager
- 30: Schwingungsdämpfer
- 40: Elektrische Maschine
- 41: Stator
- 42: Rotor
- 43: Rotorlagesensor
- 44: Sensor- und/oder Steuerkabel
- 45: elektrische Kontaktierung
- 50: Kühlkanal
- 51: Kühlkanallasche
- 110: radial verlaufender Gehäusebereich
- 120: axial verlaufender Gehäusebereich

## Patentansprüche

1. Hybridmodul (1) mit
einer Kupplung (20),
einer elektrischen Maschine (40),
einer Verbrennungsmotorseite (2),
einer Getriebeseite (3),
einem Gehäuse (10) mit einem radial verlaufenden Gehäusebereich (110), der verbrennungsmotorseitig axial neben der elektrischen Maschine (40) angeordnet ist, und mit einem axial verlaufenden Gehäusebereich (120), der das Hybridmodul (1) zumindest teilweise umgibt, und
einem Schwingungsdämpfer (30), wobei
das Gehäuse (10) zwei separate Bauteile (11, 12) aufweist, wobei ein erstes Bauteil (11) den radial verlaufenden Gehäusebereich (110) ausbildet und ein zweites Bauteil (12) den axial verlaufenden Gehäusebereich (120) ausbildet, und
das erste Bauteil (11) als Zwischenwand axial zwischen einerseits dem Schwingungsdämpfer (30) und andererseits der elektrischen Maschine (40) und/oder der Kupplung (20) angeordnet ist, wobei
die Kupplung (20) eine Betätigungseinrichtung (21) aufweist, welche an dem ersten Bauteil (11) abgestützt ist,
**dadurch gekennzeichnet, dass** das erste Bauteil (11) den Schwingungsdämpfer (30) radial übergreift.

2. Hybridmodul (1) gemäß Anspruch 1, wobei das zweite Bauteil (12) getriebeseitig einen Flansch (13) zur Anbindung einer Getriebeglocke aufweist, der eine Kontur definiert, die mindestens einen Konturbereich aufweist, der sich radial innerhalb des Außendurchmessers des axial verlaufenden Gehäusebereichs (120) befindet.

3. Hybridmodul (1) gemäß einem der vorhergehenden Ansprüche, wobei das erste Bauteil (11) mit dem zweiten Bauteil (12) und/oder einem Kühlkanal (50) und/oder einem Stator (41) der elektrischen Maschine (42) verbunden ist.

4. Hybridmodul (1) gemäß einem der vorhergehenden Ansprüche, wobei das erste Bauteil (11) und/oder das zweite Bauteil (12) eine Aussparung (14) zur Führung oder Durchführung eines Sensor- und/oder Steuerkabels (44) und/oder einer elektrischen Kontaktierung (45) zur Versorgung der elektrischen Maschine (40) und/oder der Betätigungseinrichtung (21) der Kupplung (20) mit elektrischer Energie aufweisen.

5. Hybridmodul (1) gemäß Anspruch 4, wobei die Aussparung in einem Bereich vorliegt, in dem die zwei Bauteile (11, 12) in Kontakt zueinander stehen.

6. Hybridmodul (1) gemäß einem der vorhergehenden Ansprüche, wobei das Gehäuse (10) zwei Gehäusehälften (10.1, 10.2) aufweist und wobei eine der Gehäusehälften (10.1, 10.2) das erste Bauteil (11) aufweist und die andere der Gehäusehälften (10.1, 10.2) das zweite Bauteil (12) aufweist.

## Claims

1. A hybrid module (1) comprising
a clutch (20),
an electrical machine (40),
an internal combustion engine side (2),
a transmission side (3),
a housing (10) with a radially extending housing region (110) which is arranged axially next to the electrical machine (40) on the internal combustion engine side, and with an axially extending housing region (120) which at least partially surrounds the hybrid module (1), and
a vibration damper (30), wherein
the housing (10) has two separate components (11, 12), wherein a first component (11) forms the radially extending housing region (110) and a second component (12) forms the axially extending housing region (120), and
the first component (11) is axially arranged as an intermediate wall between the vibration damper (30) on the one side and the electrical machine (40) and/or the clutch (20) on the other side, wherein
the clutch (20) has an actuating device (21) which is supported on the first component (11),
**characterised in that** the first component (11) radially overlaps the vibration damper (30).

2. The hybrid module (1) according to claim 1, wherein, on the transmission side, the second component (12) has a flange (13) for connecting a transmission bell, which defines a contour having at least one contour region which is located radially within the outer diameter of the axially extending housing region (120).

3. The hybrid module (1) according to any one of the preceding claims, wherein the first component (11) is connected to the second component (12) and/or a cooling duct (50) and/or a stator (41) of the electrical machine (42).

4. The hybrid module (1) according to any one of the preceding claims, wherein the first component (11) and/or the second component (12) has a recess (14) for guiding or feeding through a sensor and/or a control cable (44) and/or an electrical contact (45) for supplying the electrical machine (40) and/or the actuating device (21) of the coupling (20) with electrical energy.

5. The hybrid module (1) according to claim 4, wherein the recess is in a region, in which the two components (11, 12) are in contact with each other.

6. The hybrid module (1) according to any one of the preceding claims, wherein the housing (10) has two housing halves (10.1, 10.2) and wherein one of the housing halves (10.1, 10.2) has the first component (11) and the other of the housing halves (10.1, 10.2) has the second component (12).

## Revendications

1. Module hybride (1) comprenant
un embrayage (20),
une machine électrique (40),
un côté moteur à combustion interne (2),
un côté transmission (3),
un carter (10) comportant une zone de carter s'étendant radialement (110), laquelle est disposée axialement àcôté de la machine électrique (40) côté moteur à combustion interne, et une zone de carter s'étendant axialement (120), laquelle entoure au moins partiellement le module hybride (1), et
un amortisseur de vibrations (30), dans lequel
le carter (10) comporte deux composants (11, 12) séparés, dans lequel un premier composant (11) forme la zone de carter s'étendant radialement (110) et un second composant (12) forme la zone de carter s'étendant axialement (120), et
le premier composant (11) est disposé en tant qu'une paroi intermédiaire axialement entre l'amortisseur de vibrations (30) d'une part et, d'autre part, la machine électrique (40) et/ou l'embrayage (20), dans lequel
l'embrayage (20) comporte un dispositif d'actionnement (21), lequel est supporté sur le premier composant (11),
**caractérisé en ce que** le premier composant (11) s'engage radialement avec l'amortisseur de vibrations (30).

2. Module hybride (1) selon la revendication 1, dans lequel le second composant (12) comporte côté transmission une bride (13) pour attacher une cloche de transmission, laquelle définit un contour, lequel comporte au moins une zone de contour, laquelle est située radialement dans le diamètre extérieur de la zone de carter s'étendant axialement (120).

3. Module hybride (1) selon l'une quelconque des revendications précédentes, dans lequel le premier composant (11) est raccordé au second composant (12) et/ou à un canal de refroidissement (50) et/ou à un stator (41) de la machine électrique (42).

4. Module hybride (1) selon l'une quelconque des revendications précédentes, dans lequel le premier composant (11) et/ou le second composant (12) comportent un évidement (14) pour le guidage ou le passage d'un câble de capteur et/ou de commande (44) et/ou un contact électrique (45) pour alimenter en énergie électrique la machine électrique (40) et/ou le dispositif d'actionnement (21) de l'embrayage (20).

5. Module hybride (1) selon la revendication 4, dans lequel l'évidement est dans une zone dans laquelle les deux composants (11, 12) sont en contact l'un avec l'autre.

6. Module hybride (1) selon l'une quelconque des revendications précédentes, dans lequel le carter (10) comporte deux moitiés de carter (10.1, 10.2) et dans lequel l'une des moitiés de carter (10.1, 10.2) comporte le premier composant (11) et l'autre des moitiés de carter (10.1, 10.2) comporte le second composant (12).
